# EUROPEAN PATENT SPECIFICATION

(11) **EP 3 009 255 B1**
(45) Date of publication and mention of the grant of the patent: **03.04.2019**
(21) Application number: 15002915.5
(22) Date of filing: 13.10.2015
(51) Int. Cl.: B29C 65/22, B65B 51/14, B65B 31/04

(54) **VACUUM PACKAGING AND SEALING APPLIANCE WITH COOLING FAN**
VAKUUMVERPACKUNGS- UND SIEGELVORRICHTUNG MIT KÜHLGEBLÄSE
APPAREIL DE SCELLAGE ET D'EMBALLAGE SOUS VIDE AVEC VENTILATEUR DE REFROIDISSEMENT

(30) Priority: 13.10.2014 US 201414512921
(43) Date of publication of application: 20.04.2016
(73) Proprietor: Sunbeam Products, Inc., Boca Raton, FL 33431 (US)
(72) Inventor: David, Owens, Boynton Beach, Florida 33472 (US); David, Mathieu, Colchester, Connecticut 06415 (US)
(74) Representative: Intès, Didier Gérard André

(56) References cited:
- EP-A1- 2 119 629
- DE-A1- 3 316 569
- US-A1- 2005 022 474

## Description

### RELATED APPLICATIONS

### FIELD OF THE INVENTION

The present invention generally relates to a vacuum packaging and sealing appliance. More specifically, the present invention relates to a vacuum packaging and sealing appliance for food storage containers utilizing a cooling fan to generate a cooling air flow to prevent excessive heat buildup on a heat sealing element(s) to prevent premature sealing of subsequent food storage containers between successive heat sealing events.

### BACKGROUND OF THE INVENTION

Various appliances and methods are used for the purpose of vacuum packaging and sealing plastic bags and containers to protect perishables, such as foodstuffs, and other products against oxidation. Typically, these vacuum and sealing appliances use a heat sealing element to form a seal at the open end of the container being sealed. The container may even be evacuated of excess moisture and air through the use of a vacuum pump prior to heat sealing to minimize the spoiling effects of oxygen on food. However, during multiple heat sealing cycles excessive heat may buildup in the heat sealing element which may cause premature heat sealing of subsequent containers being heat sealed. Thus, the need exists for removing excessive heat from the heat sealing element to improve repetitive sealing of containers. US 2005/022474 A1 discloses a vacuum packaging device for heat sealing plastic bags, wherein the movement of the exhaust from the vacuum pump in a passage underneath the heating elements is used to cool down the heating elements.

### SUMMARY OF THE INVENTION

According to the invention, there is provided a vacuum packaging device for evacuating and sealing one or more open ends of a flexible container for storing perishable items including a vacuum motor assembly generating suction, a vacuum trough fluidly connected to the vacuum motor assembly configured to receive suction and evacuate the flexible container through one of the open ends, at least one heat sealing element adjacent the vacuum trough configured to heat seal one of the open ends of the flexible container after evacuation, a processor configured to control the vacuum motor assembly and the at least one heat sealing element, an elongated channel disposed proximate each heat sealing element, and a cooling fan in fluid communication with the channel for generating a cooling air flow through the channel to remove excessive heat generated by the heat sealing element.

### BRIEF DESCRIPTION OF THE DRAWINGS

A more complete understanding of the present invention, and the attendant advantages and features thereof, will be more readily understood by reference to the following detailed description when considered in conjunction with the accompanying drawings wherein:
FIG. 1 is a prior art container C having a single machine seal SL a distance W from a top edge E of the container C;
FIG. 2 is an embodiment of a container C' with a first seal SL₁ a predetermined distance from a top edge E of the container C' and a second seal SL₂ another predetermined distance from the first seal SL₁ and disposed between the first seal SL₁ and the top edge E of the container C';
FIG. 3 is a perspective view of an embodiment of a vacuum packaging and sealing appliance;
FIG. 4 is a perspective view of an embodiment of a vacuum packaging and sealing appliance with the lid in an open configuration;
FIG. 5 is a top view of the vacuum packaging and sealing appliance of Fig. 3 with the lid removed and a portion of the base cutaway;
FIG. 6 is a cross-section of the vacuum packaging and sealing appliance of Fig. 3;
FIG. 7 is a rear view of the vacuum packaging and sealing appliance of Fig. 3;
FIG. 8 is a cross-section of the embodiment of the vacuum packaging and sealing appliance of FIG. 4 illustrating a cooling fan providing cooling air to a chamber disposed beneath the heat sealing elements;
FIG. 9 is a bottom cutaway view of the vacuum packaging and sealing appliance of FIG. 4; and
FIG. 10 is a bottom view of the vacuum packaging and sealing appliance of FIG. 4.

### DETAILED DESCRIPTION OF THE INVENTION

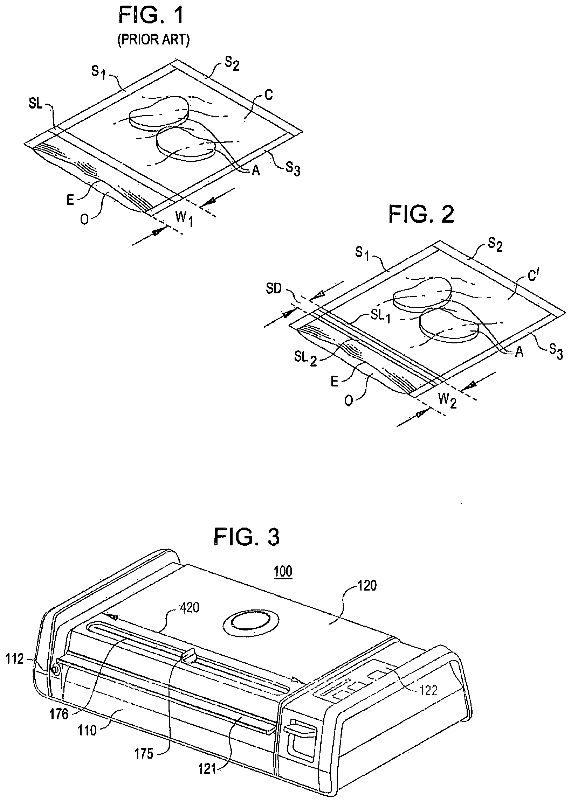

Referring now to the drawing figures in which like reference designators refer to like elements, there is illustrated in FIG. 1 a prior art container C made from two layers of transparent film or other films known to one of ordinary skill in the art. The container C may be pre-sealed at the factory along three edges by sealing the two layers together with seals S₁, S₂ and S₃. A remaining edge E may form an open end or opening O where items A to be sealed in the container C may be inserted. After the items A have been inserted through the opening O, a known vacuum sealing appliance may seal the opening O at a distance W₁ from the edge E by heat sealing or other means by forming a single machine seal SL. It is typical in current vacuum sealing machines of this type that the distance W₁ is in the twenty-five to thirty-eight millimeter range and the width of the machine seal SL is in the two to five millimeter range.

Referring now to FIG. 2, there is illustrated a partially formed flexible container C' that is utilized in the subject vacuum sealing appliance 100 described hereinbelow. The container C' may be pre-sealed along three edges at the factory by sealing the two layers together with seals S₁, S₂ and S₃. A remaining edge E may form an open end or opening O where items A to be sealed in the container C' may be inserted. In another embodiment, only two lateral edges may be pre-sealed with seals S₁ and S₃ at the factory and the remaining edges may be sealed by the vacuum sealing appliance 100 as described below. As such, the container C' may be formed from a roll of container material where a section of the bag material is cut from the roll and the two open ends are then sealed to form a hermetically sealed container C'. First, one of the open ends is sealed using the vacuum sealing appliance 100 to form a seal S₂ Next, after the items A have been inserted through the opening O, the vacuum sealing appliance 100 may seal the opening O at a predetermined distance W₂ (typically in the twenty-five to thirty-eight millimeter range) from the edge E by heat sealing at a predetermined temperature for a predetermined time to form a first machine seal SL₁. The area of the container C' disposed in the predetermined distance W₂ between the first seal SL₁ and the open end E is commonly known as the after seal area on such containers C' and its importance herein will be discussed in further detail below.

After a predetermined time has elapsed since the first machine seal SL₁ was formed, the vacuum sealing appliance 100 may form a second machine seal SL₂ a predetermined distance SD (typically in a range of two to three millimeters) from the first machine seal SL₁ and between the edge E and the first machine seal SL₁. The second seal SL₂ may be formed after a predetermined dwell period D between when the first seal SL₁ was formed to allow any liquids that may be between the film layers in the after seal area to be removed. It has been found that such liquid in the proximity of the first machine seal SL₁ during sealing may cause first seal SL₁ to seal poorly. As a precaution, after the heat sealing of first seal SL₁ is completed and the predetermined dwell time D has elapsed to evacuate any additional food or liquids in the after seal area W₂, the second seal SL₂ may be formed to ensure the integrity of the sealing of the opening O. In addition, the second seal SL₂ may be formed at a predetermined temperature higher than the predetermined temperature SL₁ was formed at and for a longer predetermined heat sealing time. The higher predetermined temperature and longer predetermined heat sealing time ensure a higher integrity seal of the second seal SL₂ as compared to the first seal SL₁. The width of the first and second seals SL₁ and SL₂ may be in the 2 -3 millimeter range.

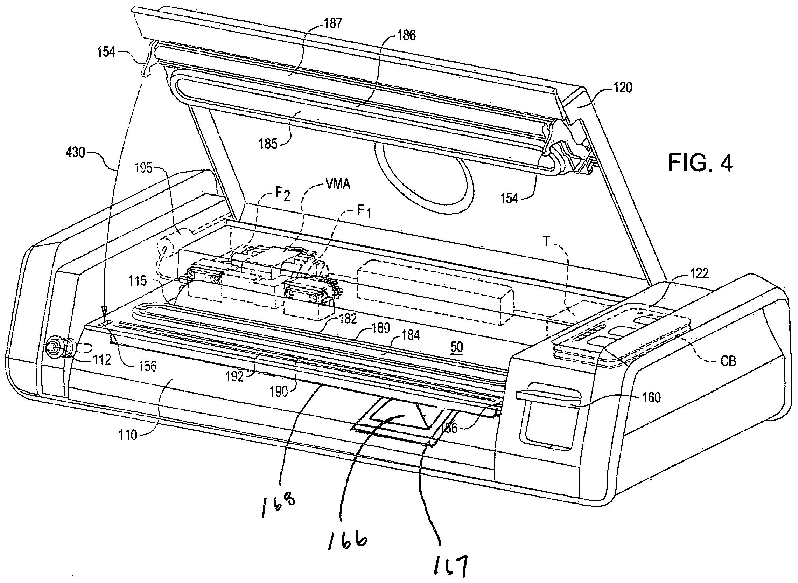

Referring now to FIGS. 3 and 4, there is illustrated an exemplary embodiment of a vacuum sealing appliance 100 for dispensing, evacuating and sealing a container C' as illustrated in FIG. 2 with a double seal SL₁, SL₂. The vacuum sealing appliance 100 may include a storage compartment 115 for a roll 50 of flexible container material that is pre-sealed on two sides with seals S₁ and S₃. A pivoting lid 120 encloses the storage compartment 115 in the closed position illustrated in FIG. 3, and oppositely, allows a section of container material to be dispensed from the roll 50 in the open position illustrated in FIG. 4. The section of container material is cut from the roll 50 with the lid 120 pivoted back to the closed position in FIG. 3 using a cutting device 175 fitted into a track 176 formed in the lid 120. The remaining open ends of the section of container material may then be sealed using the vacuum sealing appliance 100 forming seal S₂ and seals SL₁ and SL₂. Alternately, a container C' (FIG. 2) pre-sealed at the factory on three sides with seals S₁, S₂ and S₃ may be used. The remaining open end O may be sealed using the vacuum sealing appliance 100 forming the seals SL₁ and SL₂.

In the illustrated embodiment, the flexible container material is a roll 50 of flattened, tubular container material and is stored in the compartment 115 without support mechanisms and is free to rotate therein. In another embodiment, the roll 50 of container material is stored in the compartment 115 with support mechanisms (not shown) and is free to rotate therein. In another embodiment, the storage compartment 115 is eliminated and sections of flexible container material from another source are evacuated and/or sealed using the vacuum sealing appliance 100.

In an embodiment, the cutting device 175 is disposed in a track 176 formed in the lid 120. In order to cut a section of container material from the roll 50, a section of container material is pulled from the roll 50 such that the desired location where the bag material to be cut is disposed directly beneath the cutting device 175 and track 176. The lid 120 is then closed and the user then preferably slides the cutting device 175 back and forth along the track 176 in the direction of arrow 420, whereby the cutting device 175 cuts the container material to provide the user with a partially formed container C'. It should be noted that the cutting device 175 is able to be moved in a direction from left to right as well as right to left along the track 176 to cut the flexible container material. Alternately, the user does not dispense the flexible container material from the compartment 115 and/or does not cut the flexible container material using the cutting device 175.

After dispensing and cutting a section of container material, one of the open ends of the section of container material may be sealed using the vacuum sealing appliance 100 such as by heat sealing. Food items A may then be placed inside the partially formed container C' followed by the partially formed container C' being evacuated, and then the remaining open end O may be heat sealed as described below to form a hermetically sealed container C' that retains the freshness of the food items A therein.

In the exemplary embodiment, the vacuum sealing appliance 100 includes a base 110 with the storage compartment 115 formed therein and the lid 120. The lid 120 is hingedly connected to the rear portion of the base 110 for enclosing the compartment 115 and a lower vacuum trough 180. The roll storage compartment 115 is disposed behind the lower vacuum trough 180. An upper vacuum trough 185 and gasket 186 are disposed on the lid 120 and mate against the lower vacuum trough 180 and a gasket 182 when the lid 120 is in the closed position to form a composite sealed vacuum chamber. A lip 121 is disposed on the front edge of the lid 120 allowing the user to grasp the lid 120 when moving the lid between the open and closed positions.

A latch bar 160 is disposed on the exterior of the base 110 which may be depressed to lock the lid 120 into the closed position. A pair of latches 154, 154 on either side of the upper vacuum trough 185 are inserted into respective slots 156, 156 on either side of a pair of heat sealing elements 190, 192 when the lid 120 is pivoted in the direction of arrow 430 into the closed position. The latches 154, 154 each include a hook that engages a complementary cam (not shown) disposed inside the base 110 when the latch bar 160 is depressed for sealing the lid 120 into the closed position. A control panel 122 is disposed directly adjacent to the lid 120 on the top of the base 110. The control panel 122 includes a circuit board CB disposed directly beneath the control panel 122. A vacuum motor assembly VMA is disposed in the base 110 behind the lower vacuum trough 180 for providing evacuating suction. A transformer T is also disposed in the base 110 behind the lower vacuum trough 180 for providing electrical power to the electronic control panel 122 and the vacuum motor assembly VMA. A bumper 187 is provided on the front lower side of the lid 120 which mates against the heat sealing strips 190, 192 when lid 120 is in the closed position to sandwich the open end O of the container in the appliance 100 for evacuating and heat sealing the container C'.

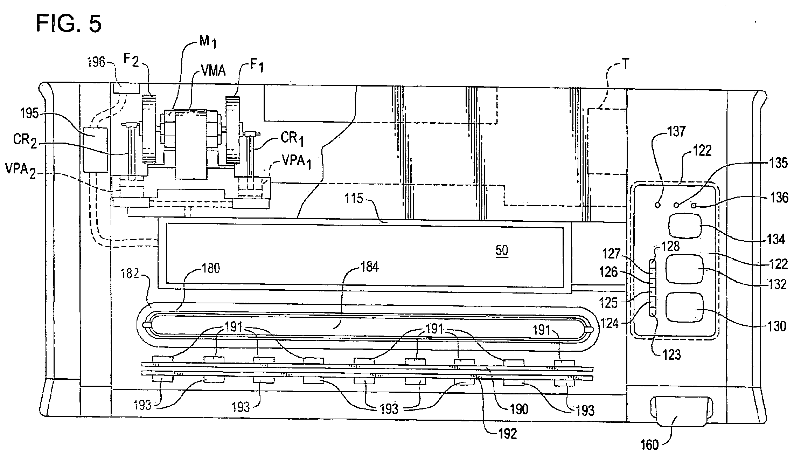

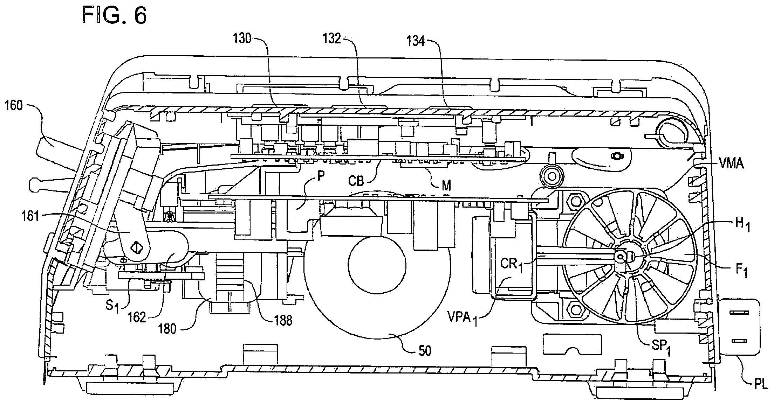

Referring now also to FIGS. 5 and 6, the foregoing vacuum and/or heat sealing operations are controlled by the user through the use of the electronic control panel 122. The electronic control 122 panel may include electronic switches 130, 132 and 134. The control panel 122 is electrically coupled to the vacuum motor assembly VMA, the circuit board CB, the heat sealing elements 190, 192 and the transformer T, whereby operation of these components are controlled by a microprocessor M on the circuit board CB. Heat sealing elements 190, 192 may have one or more temperature sensors 191, 193, respectively, disposed along their elongated length for measuring the temperature of heat seat elements 190, 192. This is to ensure that the proper sealing temperature is being applied along the entire width of the bag during heat sealing. The output of temperature sensors 191, 192 may be input to microprocessor M which may further determine a mean average temperature of heat sealing elements 190, 192 and adjust current output to heat sealing elements 190, 192 accordingly. Optionally, temperature sensors 191, 192 may be integrated into bumper 187 (FIG. 4) that presses on top of the bag material and heating sealing elements 190, 192 when lid 120 is in the closed position. The electronic control panel 122 is inoperative unless the lid 120 is closed and the latch bar 160 is in the latched position. A microswitch SW₁ is depressed when the latch bar 160 is moved to the closed position to signal the microprocessor M to energize the control panel 122.

The control panel 122 can also include other conventional components such as a power circuit (not shown), an input interface circuit (not shown), an output interface circuit (not shown), and one or more storage devices (not shown), such as a ROM (Read Only Memory) device and a RAM (Random Access Memory) device. The power circuit is connected to an AC or DC power source and directs power to the motors, sensors, etc. described herein, as well as provide power to other circuits and components of the control panel 122. The input interface circuit can be electrically connected to the electronic switches 130, 132 and 134 for user control. The output interface circuit can be electrically connected to a display (not shown), for example. The storage device stores processing results and control programs that are run by the microprocessor M. It will be apparent to those skilled in the art from this disclosure that the precise structure and algorithms for the electronic control panel 122 can be any combination of hardware and software that will carry out the functions of the present invention.

In an embodiment, the electronic switch 132 may be depressed for commencing a sealing only operation on one of the open ends of the section of container material. In this regard, it may be desirable to commence a sealing only operation on one of two open ends of the section of container material after dispensing from the roll 50. A related indicia 128 may be energized by the microprocessor M to indicate that the sealing operation has commenced. In addition, the microprocessor M energizes the heat sealing elements 190, 192 for a predetermined time at a predetermined temperature to form a seal S₂ on the open end of the section of container C'. The seal S₂ along with the pre-sealed edges S₁ and S₃ form the partially formed container C'. The partially formed container C' may be removed from the appliance 100 after the latch bar 160 is moved to the unlatched position and the lid 120 is raised. Food items A may now be placed inside the partially formed container C' which may be processed further by evacuating and/or sealing the remaining open end O as described below. In an embodiment, the indicia 128 may be a light emitting diode or other light source which is lighted during the sealing operation and may be the color red. The indicia 128 is extinguished after the predetermined sealing time has passed or after the predetermined sealing time and a dwell time for cooling has passed.

Alternately, a container C' such as that illustrated in Fig. 2 that is pre-sealed on three edges at the factory with seals S₁, S₂ and S₃ may be sealed on the remaining open end O by inserting the open end O into the appliance 100 and depressing the electronic switch 132 for the sealing only operation.

In another embodiment, the electronic switch 130 may be depressed for commencing a vacuum and sealing operation on the remaining open end O of the partially formed container C'. Upon depressing the switch 130, the vacuum motor assembly VMA is energized which delivers suction to the vacuum chamber by tubing (not shown) connected to the upper vacuum trough 185. Once a predetermined pressure is reached in the vacuum chamber as measured by a pressure transducer P on the circuit board CB, the first heating element 192 is energized at a first predetermined temperature for a first predetermined time to form the first seal SL₁. The vacuum motor assembly VMA remains energized for an additional third predetermined time after the first predetermined sealing time has elapsed. This is to allow suction from the vacuum chamber to remove any additional food or moisture between the two layers of film between the first seal SL₁ and the open end O of the container C' that may cause have caused poor seal quality when first seal SL₁ was formed. In addition, the second seal SL₂ may now be formed between first seal SL₁ and the open end O of the container C'. After the third predetermined time has elapsed, the microprocessor M de-energizes the vacuum motor assembly VMA. The microprocessor M then waits a dwell time before energizing the second heat sealing element 190 for a second predetermined time at a second predetermined temperature to form the second seal SL₂. The second seal SL₂ is a higher quality seal since any food or moisture remaining between the two layers of film between the first seal SL₁ and the open end O of the container C' has been removed. The microprocessor M de-energizes the second heat sealing element 190 after the second predetermined time has elapsed and also extinguishes the indicia 128.

The values of the first, second and third predetermined times, the predetermined dwell time, the predetermined vacuum pressure, and the first and second predetermined sealing temperatures were determined based upon experimentation for different types of container material. In an embodiment, the values of the first, second and third predetermined times are in a range between zero (0) and ten (10) seconds. The values of the first and second predetermined sealing temperatures are in a range of between 160° C- 200° C. All of the foregoing predetermined values may be pre-programmed into the microprocessor M , stored in look-up tables, or stored in other forms of digital storage media described above. The foregoing values may be hard coded or may be programmable with new values as newer container materials and predetermined heat sealing times, temperatures, pressures and dwell times are developed.

In an embodiment, after the electronic switch 130 is depressed for commencing the vacuum and sealing operation, a plurality of indicia 123-127 comprising green lights that progressively are lighted starting with indicia 123 being lighted when the evacuating and sealing operation has commenced with the remaining indicia 124-127 being lighted as the evacuating and sealing operations progresses. Further, initially as the evacuating and sealing operation commences the lower most indicia 123 may be lighted green, followed after a predetermined time interval by the next vertically positioned indicia 124 being lighted, followed by the next vertically positioned indicia 125 after the predetermined time interval, etc, until the remaining indicia 126 and 127 are lighted which represents the end of the evacuation cycle. After the sealing operations have finished, all of the plurality of indicia 123-127 and indicia 128 are extinguished and the sealed container C' may be removed from the appliance 100.

In an embodiment, the time interval between lighting of each of the plurality of indicia 123-127 is twenty percent (20%) of the evacuating and/or sealing operating cycle but this is not meant to be limiting as any number of indicia may be used and any increment between lighting of the indicia 123-127 may be used.

In an embodiment, an electronic switch 134 is provided to select a "dual seal" cycle as described above, or alternately, a "repetitive seal" cycle as described below. The electronic switch 134 is electronically connected to the microprocessor M which controls the operation of the "dual seal" and "repetitive seal" cycles. An indicia 135 is lighted when the "repetitive seal" cycle is selected and the indicia 136 is lighted when the "dual seal" cycle is selected. In particular, when the "repetitive seal" cycle is selected, upon depressing the electronic switch 132 for a sealing only operation or electronic switch 130 for a sealing and evacuating operation on the container C', the microprocessor M determines the current temperature of the heat sealing elements 190, 192 through temperature sensors 191, 193, respectively (FIG. 5).

The microprocessor M is programmed to determine whether the first heat sealing element 192 is at or below a threshold temperature such as fifty degrees (50°) Celsius before energizing the heat sealing element 192. If the first heat sealing element 192 is below fifty degrees (50°) Celsius, the microprocessor M energizes the first heat sealing element 192 for a predetermined time at a predetermined temperature to form the seal SL₁. If the first heat sealing element 192 is not below fifty degrees (50°) Celsius, the microprocessor M determines whether the second heat sealing element 190 is below fifty degrees (50°) Celsius. If so, the second heat sealing element 190 is energized for a predetermined time at a predetermined temperature to form the seal SL₂. If neither of the heat sealing elements 190, 192 are below fifty degrees (50°) Celsius, then the microprocessor M waits until one of the heat sealing elements 190, 192 is below fifty degrees (50°) Celsius until energizing that particular heat sealing element 190 or 192 for the respective predetermined time and at the predetermined temperature to form seal SL₁ or SL₂. This cycle is repeated each time the electronic switch is depressed so that the heating elements 190, 192 do not overheat when heat sealing multiple containers C' in succession.

In an embodiment, the lower vacuum trough 180 may include the removable drip tray 184 inserted therein for collecting excess liquids evacuated from the container C'. The drip tray 184 containing excess liquid evacuated from the container C' may be removed and the excess liquid discarded. Ears on either end of the drip tray 184 are provided for grasping and removing the drip tray 184. A liquid level sensor 188 may be disposed proximate to drip tray 184 for detecting an accumulation of liquids. For example, the liquid level sensor 188 may be disposed at one or both ends of drip tray 184. The output of the liquid level sensor 188 is provided to microprocessor M which may temporarily disable vacuum motor assembly VMA and heat sealing elements 190, 192 when drip tray 184 is full of liquid and exceeds a predetermined amount. Microprocessor M may also flash a "Check Tray" lighted indicia 137 disposed on control panel 122. After drip tray 184 is emptied and replaced, lighted indicia 137 is extinguished and vacuum and sealing operations may then resume until the container C' is evacuated and sealed. A similar drip tray is described and claimed in U.S. patent nos. 7,003,928 and 7,076,929, both of which owned by Jarden Consumer Solutions of Boca Raton, Florida and are incorporated by reference as if fully rewritten herein. A similar liquid level sensor is described in U.S. patent application serial no. 2005/0039420, which is owned by Jarden Consumer Solutions of Boca Raton, Florida, and incorporated by reference as if fully rewritten herein. This completes the vacuum and sealing operational cycle of the food preservation container C'.

Referring now particularly to FIG. 6, a partially cutaway view of the interior of the housing 110 of the vacuum sealing appliance 100 is provided illustrating the vacuum motor assembly VMA, circuit board CB with microprocessor M and pressure transducer P, and a transformer T for providing all of the necessary electrical power to these electrical components at a desired voltage. The transformer T receives the electrical power from an electrical power source such as 120 vac through an electrical power cord (not shown) connected to a plug PL. In embodiment, vacuum motor assembly VMA includes dual turbine fans F₁, F₂ for improved cooling efficiency. The dual turbine fans F₁, F₂ are disposed on opposite sides of an electrical motor M₁ and are rotated therewith. A spindle SP₁ on the hub H₁ of each of the dual turbine fans F₁, F₂ (only F₁ is illustrated in Fig. 6) is connected to crank arms CR₁, CR₂ of vacuum pump assemblies VPA₁, VPA₂, respectively. The reciprocating motion of the crank arms CR₁, CR₂ drive a diaphragm (not shown) in each of the vacuum pump assemblies VPA₁, VPA₂ for generating suction provided to the upper vacuum trough 185 and the suction port 112 via tubing (not shown) when the motor M₁ is energized. The use of the single motor M1 to rotate the dual turbine fans F₁, F₂ and drive the the crank arms CR₁, CR₂ of the vacuum pump assemblies VPA₁, VPA₂ eliminate the need for multiple electrical motors for powering the vacuum pump, cooling fan(s) and separate transformers for providing electrical power. As such, only the single transformer T is required reducing power consumption, complexity and the additional cost of multiple transformers.

The exact arrangement of the electronic control panel 122 and the circuit board CB, the vacuum motor assembly VMA, the pressure transducer P and microprocessor M, and the transformer T is exemplary and is not meant to be limiting in any sense. In the exemplary embodiment illustrated, the vacuum motor assembly VMA is positioned in the left side of the housing 110 behind the lower vacuum chamber 180. In an embodiment, the vacuum motor assembly VMA is fluidly connected to the upper vacuum chamber 185 via tubing (not shown) for providing evacuating suction. In another embodiment, the vacuum motor assembly VMA is fluidly connected to the lower vacuum trough 180 via tubing (not shown) for providing evacuating suction.

The circuit board CB is disposed in the housing 110 beneath the electronic control panel 122. The pressure transducer P and microprocessor M are positioned on the circuit board CB. The pressure transducer P is fluidly connected to the vacuum motor assembly VMA via tubing (not shown). A valve V may also be connected to the tubing (not shown) interconnecting the vacuum motor assembly VMA, the pressure transducer P and the composite vacuum chamber (upper vacuum trough 185 and lower vacuum trough 180) which is opened when the latch bar 160 is moved to the unlatched position to vent the vacuum chamber to ambient pressure so that the container C' may be removed from the appliance 100. The latch bar 160 is mechanically connected to a linkage 161 which is mechanically connected to an offset control rod 162 which is rotated when the latch bar 160 is moved between the latched and unlatched positions. The control rod 162 has a pair of spaced apart cams (not shown) which engage the hooks of the latches 154 when the latch bar 160 is moved the closed position to seal the lid 120 in the closed position. The switch SW₁ is likewise depressed when the latch bar 160 is moved to the closed position which sends a control signal to the microprocessor M to energize the electronic control panel 122. Oppositely, when the latch bar 160 is moved to the unlatched position the control rod 162 is rotated and the cams (not shown) release the hooks of the latches 154 so that the lid 120 is no longer sealed closed. The switch SW₁ is released such that a control signal is sent to the microprocessor M to de-energize the electronic control panel 122.

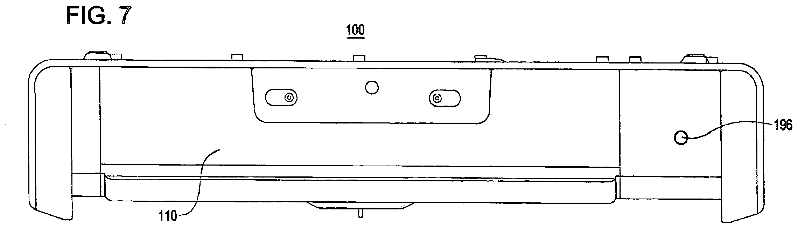

In an embodiment, a humidity or other moisture sensor 195 is connected via tubing to the exhaust ports of VPA₁ and VPA₂ of vacuum motor assembly VMA. The humidity sensor 195 is further electrically connected to the microprocessor M. The humidity sensor 195 is fluidly connected to an exhaust port 196 on the rear of housing 110 (best seen in FIG. 7) via tubing for exhausting air and moisture to the atmosphere. Based on variable input from the humidity sensor 195 detecting moisture content in the exhaust of VPA₁ and VPA₂ of vacuum motor assembly VMA, microprocessor M may slow the rate of vacuum being applied to lower vacuum chamber 186 and/or upper vacuum chamber 185. This may be desirable to reduce the amount of liquids being drawn into lower vacuum trough 186/drip tray 184 so that it doesn't overflow. In addition, upon humidity sensor 195 detecting moisture in the exhaust of VPA₁ and VPA₂ of vacuum motor assembly VMA the amount of time heat sealing elements 180, 182 are energized may be extended proportionally by microprocessor M and respective sealing temperatures adjusted to ensure a good seal on container C' which might otherwise be inhibited by the liquid being drawn through the seal area.

Referring again particularly to FIG. 1, in an embodiment the accessory port 112 is disposed on the exterior front of the base 110 and is provided for connecting an accessory hose (not shown) for evacuating a separate non-flexible container (not shown) such as a polypropylene or other canister containing a food item to be preserved. A connector (not shown) on one end of the accessory hose (not shown) connects to the accessory port 112. Another connector (not shown) on the opposite end of the accessory hose (not shown) connects to an adapter (not shown) that is fitted to an inlet on the container (not shown). The accessory hose (not shown) and connectors (not shown) fluidly connect the non-flexible container (not shown) to the vacuum motor assembly VMA disposed in the base 110 which provides the necessary suction to evacuate the non-flexible container (not shown). The accessory port 112 may include a ball-valve that closes when the connector (not shown) is not connected to prevent loss of suction. A similar vacuum sealing appliance with an accessory port with an accessory hose and connectors for evacuating a non-flexible container is disclosed in U.S. patent application serial no. 13/445,605 filed on April 12, 2012, owned by a common assignee, and is hereby incorporated be referenced as if fully re-written herein.

The vacuum motor assembly VMA is energized for providing the necessary suction to evacuate the canister (not shown) via the electronic switch 130 controlled by the electronic control panel 122. The accessory hose (not shown), connectors (not shown), and adapter (not shown) may be stored in a designated portion of the base 110 when not in use and may be accessed when the lid 120 is in the open position shown in FIG. 2. A pair of clips (not shown) may be provided on the underside of lid 120 for securably storing these items.

With the latch bar 160 in the latched position, the electronic control 130 may be depressed to activate the vacuum motor assembly VMA which provides suction to the accessory port 112 which is applied to the container (not shown) through the accessory hose (not shown). After a predetermined pressure is achieved in the vacuum tubing connecting the accessory port 112 to the vacuum motor assembly VMA, the pressure transducer P signals the microprocessor M to de-energize the vacuum motor assembly so that the container (not shown) may be disconnected from the accessory hose (not shown) and sealed.

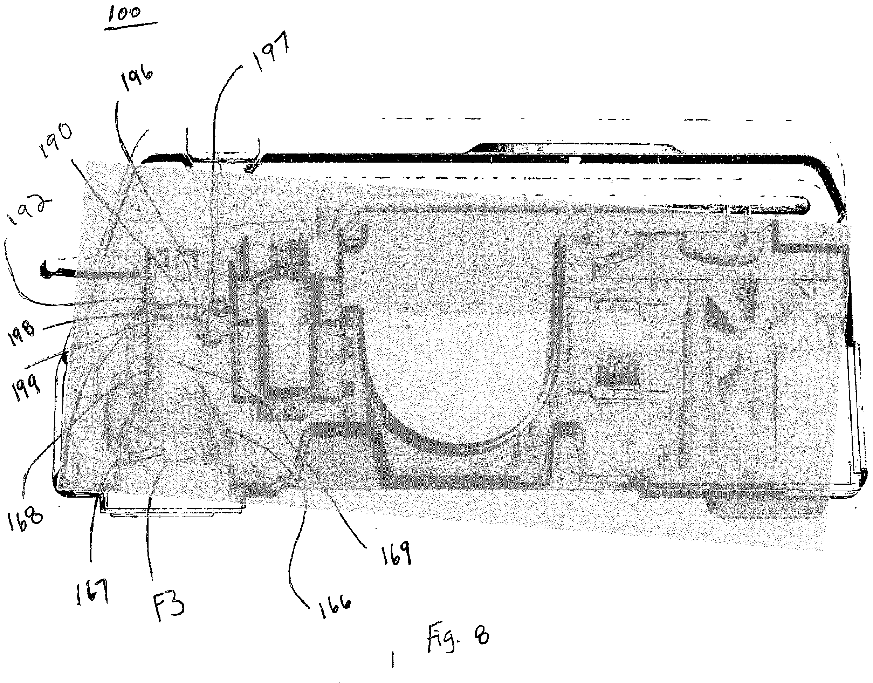

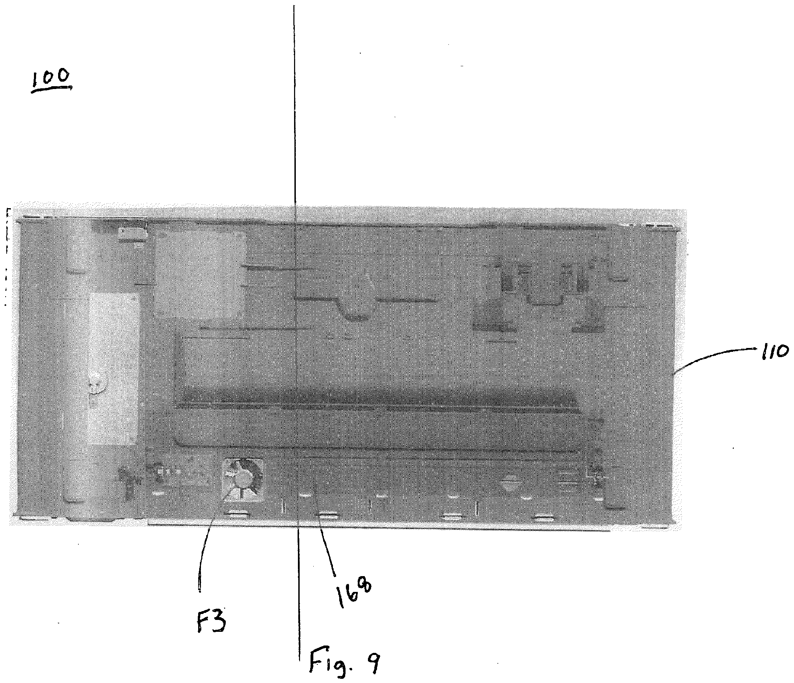

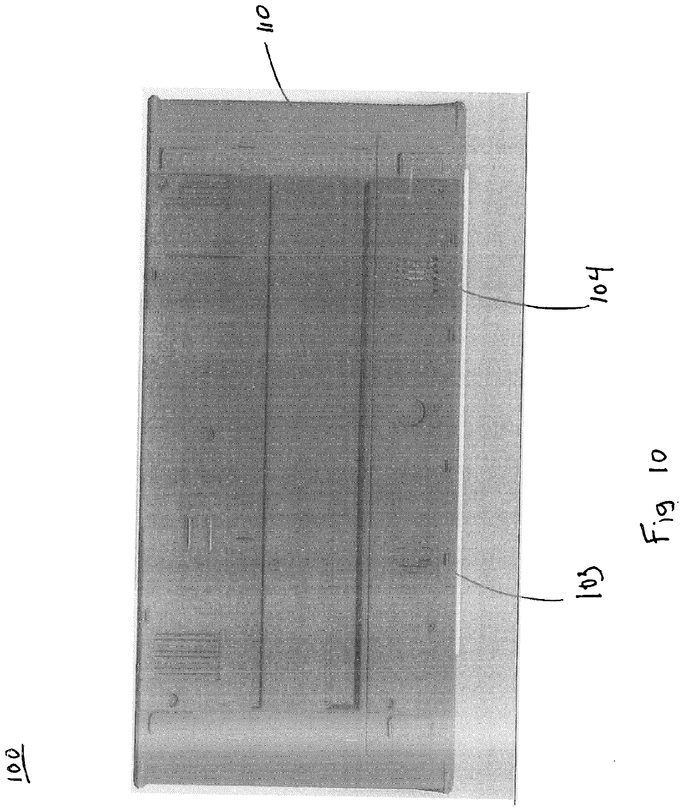

Referring now also to Figs. 8-10 and 4, there is illustrated an embodiment of a vacuum sealing appliance 100 for dispensing, evacuating and sealing a container C' as described above with a cooling fan F3 added disposed proximate the heat sealing elements 190, 192. The cooling fan F3 provides cooling air drawn from outside the vacuum sealing appliance 100 to the proximity of the heat sealing elements 190, 192 continuously including between heat sealing events to prevent excessive buildup of heat in the heat sealing elements 190, 192. The buildup of excessive heat could cause premature sealing of subsequent containers C' between successive heat sealing events. The cooling fan F3 is operatively connected to the electronic control panel 122, circuit board CB and the microprocessor M which provide electrical power and control its operation. For example, cooling fan F3 may be energized when electronic control panel 122 is energized.

The heat sealing elements 190, 192 are mounted on top of elongated u-shaped channel members 196, 198, respectively. The u-shaped channel members 196, 198 may be comprised of any suitable material such as an aluminum alloy which has suitable characteristics such as withstanding high operating temperatures, heat conduction, and heat dissipation. The u-shaped channels 196, 198 partially form inner channels 197, 199 which cooling air from fan F3 may be directed to remove excessive heat from the heat sealing elements 190, 192, respectively. An elongated metallic plate 165 comprised of a suitable material such as an aluminum alloy is sandwhiched between the the u-shaped channels 196, 198 and an elongated structural member 168 to complete the inner channels 197, 199. The structural member 168 has a passage 169 in fluid communication with the inner channels 197, 199. The passage 169 is in fluid communication with a plenum 166 having a truncated pyramidal shape. The plenum 166 is in fluid communication with a cooling fan F3.

When energized, cooling air from the cooling fan F3 is directed to the inner channels 197, 199 through the plenum 166 and the passage 169. The cooling fan F3 is mounted on a frame 167 that fits into an open end of the plenum 166. The inlet side of the cooling fan F3 abuts an inlet vent 103 formed on the bottom of the base 110 of the appliance 100. Thus, while cooling fan F3 is operating cooling air is drawn through the inlet vent 103 into the plenum 166 and further to the passage 169 and inner channels 197, 199. The cooling air passes through the inner channels 197, 199 to absorb excess heat from heat sealing elements 190, 192 and the u-shaped channels 196, 198. The heated air is further directed to an outlet vent 104 fluidly connected to the inner channels 197, 199 and into the atmosphere exterior of the appliance 100.

In an embodiment, there is provided a method 500 of vacuum packaging and sealing a container C' using an appliance 100 as described above and illustrated in the corresponding Figs. 1-10.

The method begins in step 505.

The method continues in step 510 including using a microprocessor to control a vacuum motor and first and second heating elements in programmable sequences.

In step 520, the method includes at least one of the programmable sequences includes energizing the vacuum motor to provide suction to the vacuum trough.

In step 530, the method includes the step 530 of energizing the second sealing element at a first predetermined temperature for a first predetermined time when a first predetermined vacuum level is reached in the vacuum trough.

In step 540, the method includes the step 540 of de-energizing the vacuum motor after a second predetermined time has elapsed after the second sealing element has been de-energized.

In step 550, the method includes the step 550 of delaying a dwell time.

In step 560, the method includes the step 560 of energizing the first sealing element at the expiration of the dwell time at a second predetermined temperature for a third predetermined time.

In step 570, the method 500 ends.

## Claims

1. A vacuum packaging device (100) for evacuating and sealing one or more open ends of a flexible container (C') for storing perishable items, comprising:
a vacuum motor assembly (VMA) generating suction;
a vacuum trough (180) fluidly connected to the vacuum motor assembly (VMA) configured to receive suction and evacuate the flexible container (C') through one of the open ends;
at least one heat sealing element (190, 192) adjacent the vacuum trough (180) configured to heat seal one of the open ends of the flexible container (C') after evacuation;
a processor (M) configured to control the vacuum motor assembly (VMA) and the at least one heat sealing element (190, 192);
an elongated channel (197, 199) disposed proximate each heat sealing element (190, 192); and **characterized by** a cooling fan (F3) in fluid communication with the channel (197, 199) for generating a cooling air flow through the channel (197, 199) to remove excessive heat generated by the heat sealing element (190, 192).

2. The vacuum packaging device (100) of claim 1, further comprising:
a cooling air intake vent (103) in fluid communication with the cooling fan (F3) and the channel (197, 199) configured to allow entry of cooling air drawn by the cooling fan (F3) into the channel (197, 199).

3. The vacuum packaging device (100) of claim 1, further comprising:
an exhaust vent (104) in fluid communication with the channel (197, 199) configured to allow heated airflow to exit the channel (197, 199).

4. The vacuum packaging device (100) of claim 1, wherein the cooling fan (F3) is configured to be energized continuously.

5. The vacuum packaging device (100) of claim 1, further comprising:
an electronic control panel (122) connected to the processor (M) configured to control the operation of the cooling fan (F3).

6. The vacuum packaging device (100) of claim 5, wherein the cooling fan (F3) is configured to be energized continuously when the electronic control panel (122) is energized.

## Patentansprüche

1. Vakuumverpackungsvorrichtung (100) zum Luftabsaugen und Versiegeln eines oder mehrerer offener Enden eines flexiblen Behälters (C') zum Aufbewahren verderblicher Gegenstände, umfassend:
eine Vakuummotorbaugruppe (VMA), die eine Saugwirkung erzeugt,
eine Vakuumschale (180), die mit der Vakuummotorbaugruppe (VMA) in Strömungsverbindung steht und dafür konfiguriert ist, die Saugwirkung zu erhalten und die Luft aus dem flexiblen Behälter (C') durch eines der offenen Enden abzusaugen,
mindestens ein Heißversiegelungselement (190, 192) neben der Vakuumschale (180), das dafür konfiguriert ist, eines der offenen Enden des flexiblen Behälters (C') nach der Luftabsaugung heißzuversiegeln,
einen Prozessor (M), der dafür konfiguriert ist, die Vakuummotorbaugruppe (VMA) und das mindestens eine Heißversiegelungselement (190, 192) zu steuern,
einen länglichen Kanal (197, 199), der nahe jedem Heißversiegelungselement (190, 192) angeordnet ist, und **gekennzeichnet durch**
ein Kühlgebläse (F3) in Strömungsverbindung mit dem Kanal (197, 199) zum Erzeugen eines Kühlluftstroms durch den Kanal (197, 199) zum Abführen überschüssiger Wärme, die durch das Heißversiegelungselement (190, 192) erzeugt wird.

2. Vakuumverpackungsvorrichtung (100) nach Anspruch 1, ferner umfassend:
einen Kühllufteinlass (103) in Strömungsverbindung mit dem Kühlgebläse (F3) und dem Kanal (197, 199), der dafür konfiguriert ist, den Eintritt von Kühlluft zu gestatten, die durch das Kühlgebläse (F3) in den Kanal (197, 199) gesaugt wird.

3. Vakuumverpackungsvorrichtung (100) nach Anspruch 1, ferner umfassend:
einen Auslass (104) in Strömungsverbindung mit dem Kanal (197, 199), der dafür konfiguriert ist, einen erwärmten Luftstrom aus dem Kanal (197, 199) austreten zu lassen.

4. Vakuumverpackungsvorrichtung (100) nach Anspruch 1, wobei das Kühlgebläse (F3) dafür konfiguriert ist, dauerhaft mit Strom versorgt zu werden.

5. Vakuumverpackungsvorrichtung (100) nach Anspruch 1, ferner umfassend:
ein elektronisches Bedienfeld (122), das mit dem Prozessor (M) verbunden ist, und dafür konfiguriert ist, den Betrieb des Kühlgebläses (F3) zu steuern.

6. Vakuumverpackungsvorrichtung (100) nach Anspruch 5, wobei das Kühlgebläse (F3) dafür konfiguriert ist, dauerhaft mit Strom versorgt zu werden, wenn das elektronische Bedienfeld (122) mit Strom versorgt wird.

## Revendications

1. Dispositif d'emballage sous vide (100) pour mettre sous vide et sceller une ou plusieurs extrémités ouvertes d'un contenant souple (C') pour stocker des produits périssables, comprenant :
un ensemble de moteur à vide (VMA) générant une aspiration ;
un bac à vide (180) raccordé, de manière fluidique, à l'ensemble de moteur à vide (VMA) configuré pour recevoir l'aspiration et mettre sous vide le contenant souple (C') à travers l'une des extrémités ouvertes ;
au moins un élément de thermosoudage (190, 192) adjacent au bac à vide (180) configuré pour thermosouder l'une des extrémités ouvertes du contenant souple (C') après la mise sous vide ;
un processeur (M) configuré pour commander l'ensemble de moteur à vide (VMA) et le au moins un élément de thermosoudage (190, 192) ;
un canal allongé (197, 199) disposé à proximité de chaque élément de thermosoudage (190, 192) ; et **caractérisé par** :
un ventilateur de refroidissement (F3) en communication de fluide avec le canal (197, 199) pour générer un écoulement d'air de refroidissement à travers le canal (197, 199) pour supprimer la chaleur excessive générée par l'élément de thermosoudage (190, 192).

2. Dispositif d'emballage sous vide (100) selon la revendication 1, comprenant en outre :
un évent d'admission d'air de refroidissement (103) en communication de fluide avec le ventilateur de refroidissement (F3) et le canal (197, 199) configuré pour permettre l'entrée de l'air de refroidissement aspiré par le ventilateur de refroidissement (F3) dans le canal (197, 199).

3. Dispositif d'emballage sous vide (100) selon la revendication 1, comprenant en outre :
un évent d'échappement (104) en communication de fluide avec le canal (197, 199) configuré pour permettre à l'écoulement d'air chauffé de sortir par le canal (197, 199).

4. Dispositif d'emballage sous vide (100) selon la revendication 1, dans lequel le ventilateur de refroidissement (F3) est configuré pour être alimenté de manière continue.

5. Dispositif d'emballage sous vide (100) selon la revendication 1, comprenant en outre :
un panneau de commande électronique (122) raccordé au processeur (M) configuré pour commander le fonctionnement du ventilateur de refroidissement (F3).

6. Dispositif d'emballage sous vide (100) selon la revendication 5, dans lequel le ventilateur de refroidissement (F3) est configuré pour être alimenté, de manière continue, lorsque le panneau de commande électronique (122) est alimenté.
